# EUROPÄISCHE PATENTANMELDUNG

(11) **EP 2 025 738 A1**
(43) Veröffentlichungstag der Anmeldung: **18.02.2009**
(21) Anmeldenummer: 07019553.2
(22) Anmeldetag: 05.10.2007
(51) Int. Cl.: C10L 5/44, B27L 11/00, B27L 1/08

(54) **Verfahren zur Herstellung von Holzpellets aus Hackgut**

(30) Priorität: 27.07.2007 AT 11882007
(71) Anmelder: Schörkhuber, Johannes, 4463 Grossraming (AT)
(72) Erfinder: Schörkhuber, Johannes, 4463 Grossraming (AT)
(74) Vertreter: Babeluk, Michael

(57) **Zusammenfassung**

Die Erfindung betrifft ein Verfahren zur Herstellung von Holzpellets aus Hackgut mit folgenden Schritten:
- Klassierung des Hackguts;
- Aussortierung von Rindenanteilen;
- Zerkleinerung;
- Konditionierung und Pelletierung.

Eine gesteigerte Effizienz kann dadurch erreicht werden, dass die aussortierten Rindenanteile verbrannt werden und die entstehende Wärme zur Trocknung des Hackguts eingesetzt wird. Weiters betrifft die Erfindung eine Vorrichtung zur Durchführung des Verfahrens.

## Beschreibung

Die Erfindung betrifft ein Verfahren zur Herstellung von Holzpellets aus Hackgut mit folgenden Schritten:
- Klassierung des Hackguts;
- Aussortierung von Rindenanteilen;
- Zerkleinerung;
- Konditionierung und Pelletierung.

Die obigen Schritte müssen dabei nicht zwangsläufig in der angegebenen Reihenfolge durchgeführt werden, sondern können in Abhängigkeit von den gegebenen Anforderungen auch umgruppiert werden.

Holzpellets gewinnen aufgrund der verschärften Umweltproblematik sehr stark an Bedeutung als Heizmaterial. Daher sind die nachgefragten Mengen stark ansteigend.

Anfänglich wurden Holzpellets primär aus rindenfreien Säge-Nebenprodukten hergestellt. Auf diese Weise ist es möglich, ohne besondere Maßnahmen die vorgegebenen Normen einzuhalten und zwar insbesondere einen niedrigen Ascheanteil zu gewährleisten. Durch die gestiegenen Produktionsmengen kommt es jedoch zu einer Verknappung des Rohmaterials, was sich auch entsprechend auf die Herstellkosten auswirkt. Es ist daher wünschenswert, auch ein alternatives Ausgangsmaterial einsetzen zu können, um Holzpellets herstellen zu können. Als ein solches Ausgangsmaterial bietet sich bevorzugt Hackgut aus Waldholz an, das in großen Mengen verfügbar ist. Nachteilig dabei ist jedoch, dass bei der Verwendung von Hackgut das Produktionsverfahren angepasst werden muss, da ansonsten die geforderten Spezifikationen des Endprodukts nicht eingehalten werden können. Insbesondere ist es dabei erforderlich, Rindenanteile auszusortieren, um den erforderlichen Aschegehalt einhalten zu können.

Aus der EP 0 958 427 B ist ein Verfahren zur Herstellung eines Brennstoffs aus Hackgut bekannt, bei dem die Rindenanteile abgetrennt und thermisch verwertet werden.

Die EP 0 502 041 B beschreibt ein Verfahren zur Abtrennung von Rindenanteilen aus Hackgut.

Die vorbekannten Herstellungsverfahren sind aufwendig und benötigen einen relativ hohen Einsatz an Energie, der den ökologischen Nutzen des Brennstoffs schmälert. Darüber hinaus hat sich herausgestellt, dass die Qualität des Endprodukts nicht in allen Fällen befriedigend ist.

Aufgabe der vorliegenden Erfindung ist es, diese Nachteile zu vermeiden und ein Verfahren anzugeben, mit dem hochqualitative Holzpellets aus Hackgut unterschiedlicher Zusammensetzung betriebssicher und kostengünstig hergestellt werden kann.

Diese Aufgaben werden dadurch gelöst, dass die aussortierten Rindenanteile verbrannt werden und die entstehende Wärme zur Trocknung des Hackguts eingesetzt wird.

Wesentlich an der vorliegenden Erfindung ist, dass das Herstellungsverfahren in sich geschlossene Material- und Energiekreisläufe aufweist. Durch die Trocknung des Hackguts vor der Klassierung und vor der Aussortierung der Rinde kann die Trennschärfe wesentlich erhöht werden, was sich positiv auf die Qualität des Endprodukts auswirkt. Der Gesamtenergieeinsatz ist dabei minimal bzw. es kann unter gegebenen Umständen, das heißt bei hohen Rindenanteilen, ein Energieüberschuss bei der Durchführung des Verfahrens erzielt werden. Dies gilt insbesondere auch dann, wenn die bei der Klassierung ausgesonderten Teile gemeinsam mit der Rinde verbrannt werden.

Als besonders vorteilhaft hat sich eine Aussonderung der Rindenanteile durch ein optisches Verfahren erwiesen. Auf diese Weise kann ein Endprodukt von besonders hoher Qualität erzielt werden.

Weiters betrifft die Erfindung eine Vorrichtung zur Herstellung von Holzpellets aus Hackgut mit einer Klassiereinrichtung, einer Abtrenneinrichtung für Rindenanteile, einer Zerkleinerungseinrichtung und einer Konditionier- und Pelletiereinrichtung. Erfindungsgemäß ist diese Vorrichtung **dadurch gekennzeichnet, dass** eine Trocknungseinrichtung für das Hackgut vorgesehen ist, die dazu ausgebildet ist, die Verbrennungswärme der Rindenanteile zu nutzen. Mit einer solchen Vorrichtung ist es möglich, das oben beschriebene Verfahren in optimaler Weise umzusetzen.

Besonders günstig ist es, wenn die Trocknungseinrichtung einen Biomassekessel umfasst. Dieser ist besonders für die Verbrennung von Rindenanteilen und anderen Trennstoffen geringer Qualität geeignet. Durch entsprechende Abgasnachbehandlungen können dabei falls erforderlich sämtliche ökologische Anforderungen erfüllt werden.

Die Qualität der Abscheidung und der Aufbereitung des Rohmaterials kann wesentlich dadurch verbessert werden, dass die Trocknungseinrichtung stromaufwärts der Klassiereinrichtung angeordnet ist. Ein wesentlicher Vorteil dieser Lösung ist, dass die Trocknung so auch die zur Verbrennung bestimmte Fraktion d.h. die Rinde umfasst, so dass der Verbrennungsvorgang entsprechend effizient gestaltbar ist.

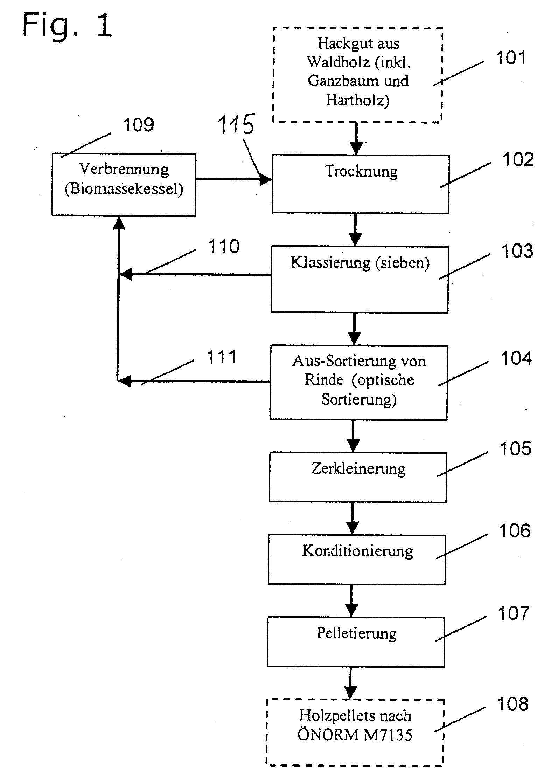

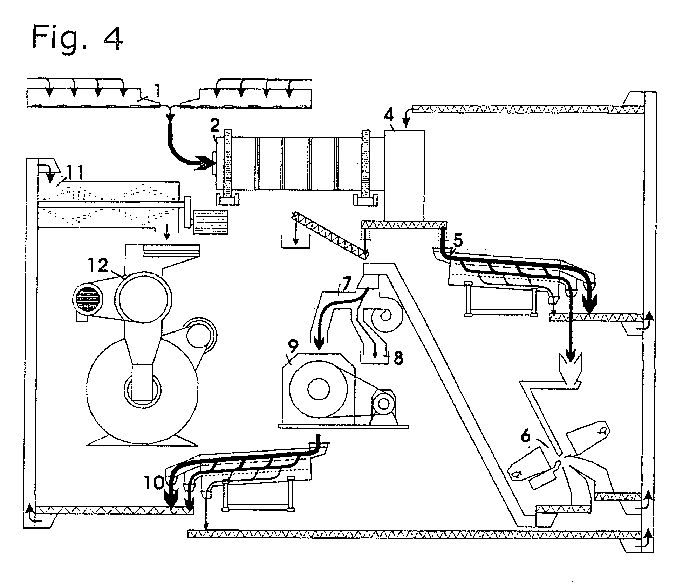

In der Folge wird die vorliegende Erfindung anhand der in den Figuren Ausführungsvariante näher erläutert. Es zeigen: Fig. 1 bis 3 Flussdiagramme zur Erklärung des erfindungsgemäßen Verfahrens und Fig. 4 ein Anlagenschema.

Mit 101 ist in Fig. 1 das Einsatzmaterial gekennzeichnet, bei dem es sich um Hackgut aus Waldholz inklusiver ganzer Bäume und Hartholz handelt. Dieses Material wird in Schritt 102 getrocknet, in Schritt 103 klassiert und gesiebt. Das Material, das Schritt 103 passiert hat, wird in Schritt 104 einer Aussortierung unterworfen, bei dem die Rindenanteile optisch aussortiert werden. In Schritt 105 erfolgt eine Zerkleinerung, in Schritt 106 eine Konditionierung und in Schritt 107 die Pelletierung, die bei 108 zu Holzpellets führt, die die entsprechenden Anforderungen erfüllen, wie etwa die Önorm M7135.

Aus dem Flussdiagramm ist ersichtlich, dass mit Pfeil 110 die in Schritt 3 ausgeschiedenen Teile einem Biomassekessel 109 zugeführt werden. Ähnliches gilt mit Pfeil 111 für die Rindenanteile, die in Schritt 104 abgeschieden werden. Bei 115 wird die bei der Verbrennung entstehenden Wärme verwendet, um die Trocknung von Schritt 102 durchzuführen.

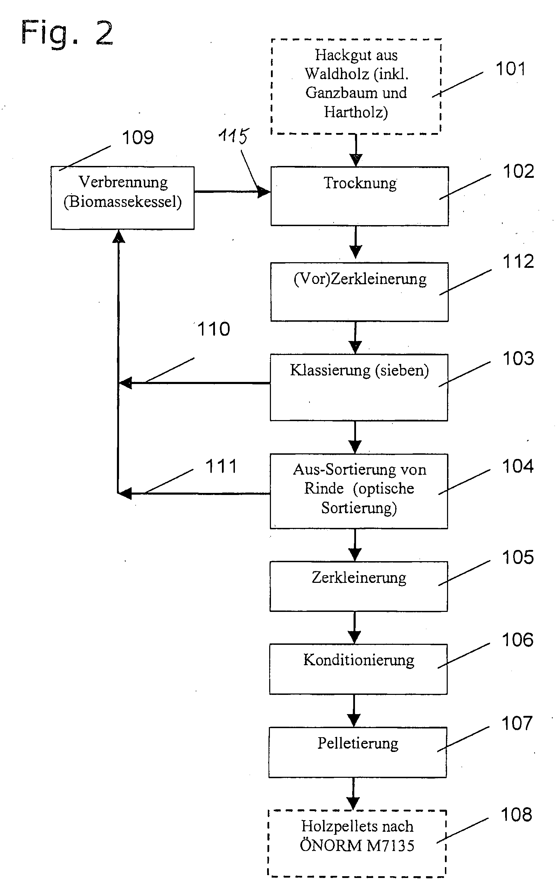

Bei der alternativen Ausführungsvariante von Fig. 2 wird nach der Trocknung von Schritt 102 eine Vorzerkleinerung 112 durchgeführt. Ansonsten bleibt das Verfahren unverändert.

Fig. 3 zeigt eine Verfahrensvariante, bei der zusätzlich in Schritt 105 ein weiteres Rohmaterial, nämlich Sägespäne 113 zugegeben werden, die aufgrund ihrer günstigen Beschaffenheit nicht den davor liegenden Verfahrensschritten 102 bis 104 unterworfen werden müssen.

In Fig. 4 sind die wesentlichen Komponenten der erfindungsgemäßen Vorrichtung dargestellt. Das Ausgangsmaterial wird in einer Rohstoffaufnahme 1 aufgegeben und in einer Trocknungseinrichtung 2 getrocknet. Bei 4 wird die abgeschiedene Rinde als Brennmaterial für die Trocknung aufgegeben. In der Klassiereinrichtung 5 erfolgt eine Grobabscheidung einer ersten Rindenfraktion. Eine optische Abtrenneinrichtung 6 sortiert weitere Rindenanteile aus. In einem Zyklonabscheider 7 wird störender Staub entfernt und in 8 ausgetragen. Mit 9 ist eine Zerkleinerungseinrichtung bezeichnet, die beispielsweise als Hammermühle ausgeführt ist. Über ein Sieb 10 wird das bearbeitete Material einer Konditioniereinrichtung 11 und einer Pelletspresse 12 zugeführt.

Die vorliegende Erfindung ermöglicht es, auch aus minderwertigen Ausgangsmaterialien Brennstoffe hoher Qualität effizient herzustellen.

## Patentansprüche

1. Verfahren zur Herstellung von Holzpellets aus Hackgut mit folgenden Schritten:
- Klassierung des Hackguts;
- Aussortierung von Rindenanteilen;
- Zerkleinerung;
- Konditionierung und Pelletierung;
**dadurch gekennzeichnet, dass** die aussortierten Rindenanteile verbrannt werden und die entstehende Wärme zur Trocknung des Hackguts eingesetzt wird.

2. Verfahren nach Anspruch 1, **dadurch gekennzeichnet, dass** die Trocknung vor der Klassierung erfolgt.

3. Verfahren nach einem der Ansprüche 1 oder 2, **dadurch gekennzeichnet, dass** bei der Klassierung ausgesonderte Teile gemeinsam mit der Rinde verbrannt werden.

4. Verfahren nach einem der Ansprüche 1 bis 3, **dadurch gekennzeichnet, dass** die Aussortierung von Rindenanteilen auf Basis einer optischen Erkennung erfolgt.

5. Vorrichtung zur Herstellung von Holzpellets aus Hackgut mit einer Klassiereinrichtung (5), einer Abtrenneinrichtung (6) für Rindenanteile, einer Zerkleinerungseinrichtung (9) und einer Konditionier- und Pelletiereinrichtung (11, 12), **dadurch gekennzeichnet, dass** eine Trocknungseinrichtung (2) für das Hackgut vorgesehen ist, die dazu ausgebildet ist, die Verbrennungswärme der Rindenanteile zu nutzen.

6. Vorrichtung nach Anspruch 5, **dadurch gekennzeichnet, dass** die Trocknungseinrichtung (2) einen Biomassekessel umfasst.

7. Vorrichtung nach einem der Ansprüche 5 oder 6, **dadurch gekennzeichnet, dass** die Trocknungseinrichtung (2) stromaufwärts der Klassiereinrichtung (5) angeordnet ist.
